(19) Europäisches Patentamt
European Patent Office
Office européen des brevets

(11) EP 0 944 670 B1

(12) EUROPEAN PATENT SPECIFICATION

(45) Date of publication and mention of the grant of the patent:
**16.04.2003 Bulletin 2003/16**

(21) Application number: **97948188.4**

(22) Date of filing: **13.11.1997**

(51) Int Cl.⁷: **C08L 51/06**, C08L 23/04

(86) International application number:
**PCT/US97/20220**

(87) International publication number:
**WO 98/026001 (18.06.1998 Gazette 1998/24)**

# (54) ABRASION-RESISTANT, SILANE-CROSSLINKABLE POLYMER AND POLYMER BLEND COMPOSITIONS

SILANVERNETZBARE POLYMER UND POLYMERMISCHUNGZUSAMMENSETZUNGEN MIT ABRASIONWIDERSTAND

POLYMERE POUVANT ETRE RETICULE PAR DU SILANE ET RESISTANT A L'ABRASION, ET COMPOSITIONS A BASE DE MELANGES DE POLYMERES

(84) Designated Contracting States:
**BE DE DK ES FR GB IT NL**

(30) Priority: **13.12.1996 US 34648 P**
**07.11.1997 US 965901**

(43) Date of publication of application:
**29.09.1999 Bulletin 1999/39**

(73) Proprietor: **DUPONT DOW ELASTOMERS L.L.C.**
**Wilmington, DE 19809 (US)**

(72) Inventors:
- **WEAVER, Laura**
**Hudson, Ohio 44236 (US)**
- **HUGHES, Morgan, M.**
**Angleton, TX 77541 (US)**

(74) Representative: **Jones, Alan John**
**CARPMAELS & RANSFORD**
**43 Bloomsbury Square**
**London, WC1A 2RA (GB)**

(56) References cited:
**EP-A- 0 211 154** **EP-A- 0 256 246**
**WO-A-95/29197** **WO-A-96/22328**
**GB-A- 2 002 395** **GB-A- 2 093 760**
**GB-A- 2 116 986** **US-A- 4 058 583**
**US-A- 4 618 654**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 944 670 B1

## Description

FIELD OF THE INVENTION

This invention relates generally to crosslinkable polymer compositions. This invention particularly relates to such compositions wherein crosslinking occurs through a vinyl silane moiety. This invention also relates particularly to polymer compositions that include both an elastomer and a crystalline polymer, such as polypropylene homopolymer or a propylene/alpha-olefin (α-olefin) copolymer. This invention more particularly relates to polymer compositions wherein elastomer components have a hardness (Shore A) of 85 or less (≤ 85).

BACKGROUND OF THE INVENTION

An accepted literature teaching is that wear rates of materials, including polymers, can be correlated to mechanical properties of such materials. Mechanical properties include hardness, tensile break strength and elongation to break. See, e.g., J. K. Lancaster, "Relationship Between the Wear of Polymers and Their Mechanical Properties", Proceedings of the Institution of Mechanical Engineers 1968-69, Volume 183, Part 3P, pages 98-106.

Anne E. Bovari and Sherry B. Glenn, in "Selecting Materials for Wear Resistance", Plastics Engineering, December 1995. pages 31-33, make several observations regarding abrasion at page 32. "Abrasion occurs in contacts in which one surface is considerably harder than the other, e.g., sandpaper on wood". They note that, "in such a situation, the asperities of the harder surface penetrate the softer surface, and, as a result of relative motion, material is displaced from the softer body". They suggest that wear particle generation should be low and abrasion resistance high when a material has a high hardness or resistance to penetration by the asperities.

The American Society for Testing and Materials (ASTM) standard test method for abrasion resistance is ASTM D 1630-83. The test method is particularly suitable for determining resistance to abrasion of vulcanized rubber or other compounds, used for footwear soles and heels. The method employs a National Bureau of Standards (NBS) abrasion machine.

Mike Wilson, in "Slip Resistance Performance of Soling Materials", SATRA Bulletin, May 1996, pages 77-79, a publication produced by SATRA Footwear Technology Centre, suggests, at page 78, that a minimum coefficient of friction (COF) for footwear soles and heels on dry and wet quarry tile is 0.3. He also suggests, at page 79, that footwear for sports and industrial applications may be more demanding in terms of slip resistance and require a COF of at least 0.4, sometimes at least 0.6.

In order to attain acceptable product life for footwear soles and heels, an improvement in abrasion resistance appears to be desirable. By following the teachings of Lancaster and Bovari et al., one approach to improving abrasion resistance is to increase hardness in order to minimize penetration by asperities. This approach, however, has its limits. At some point, the hardness is so high that consumers will not accept use of the material in footwear soles and heels because they are uncomfortable. Footwear designers also have hardness limitations because increasingly hard materials have fewer processing options.

A perceived need, particularly for footwear end use applications such as soles and heels, exists for improving abrasion resistance of a material without increasing its hardness to a level that renders it unacceptable from a consumer or designer perspective.

SUMMARY OF THE INVENTION

An aspect of the invention is a nonporous, grafted and crosslinked elastomer composition as set forth hereinafter in Claim 1. The abrasion resistance of the grafted and crosslinked elastomer composition is desirably at least 25 percent (%) greater, preferably at least 50% greater, than that of the ungrafted elastomer composition.

A second aspect of the invention is a crosslinkable elastomer composition as set forth hereinafter in Claim 2. The abrasion resistance of the crosslinked composition is desirably at least (≥) 25% greater, preferably ≥ 50% greater, than the abrasion resistance of the crosslinkable composition.

DESCRIPTION OF PREFERRED EMBODIMENTS

Unless otherwise stated herein, all ranges include both end points.

"Ethylene polymers" means an EAO copolymer or a diene modified EAO copolymer. Illustrative polymers include ethylene/propylene (EP) copolymers, ethylene/octene (EO) copolymers, ethylene/butylene (EB) copolymers and ethylene/propylene/diene (EPDM) interpolymers. More specific examples include, homogeneously branched, substantially linear ethylene/α-olefin polymers (e.g. the Affinity™ polymers available from The Dow Chemical Company and Engage® polymers available from DuPont Dow Elastomers L.L.C.). The more preferred olefinic polymers are the

homogeneously branched substantially linear ethylene copolymers with a density (measured in accordance with ASTM D-792) from 0.85 to 0.92 grams per cubic centimeter (g/cm$^3$), especially from 0.85 to 0.90 g/cm$^3$ and a melt index or MI (measured in accordance with ASTM B-1238 (190°C/2.16) from 0.01 to 500, preferably from 0.05 to 30 grams per ten minutes (g/10 min.).

"Substantially linear" means that a polymer has a backbone substituted with from 0.01 to 3 long-chain branches per 1000 carbons in the backbone.

"Long-chain branching" or "LCB" means a chain length of ≥ 6 carbon atoms. Above this length, carbon-13 nuclear magnetic resonance ($C^{13}$ NMR) spectroscopy cannot distinguish or determine an actual number of carbon atoms in the chain. In some instances, a chain length can be as long as the polymer backbone to which it is attached. For ethylene/alpha-olefin copolymers, the long chain branch is longer than the short chain branch that results from the incorporation of the alpha-olefin(s) into the polymer backbone.

"Interpolymer" refers to a polymer having polymerized therein at least two monomers. It includes, for example, copolymers, terpolymers and tetrapolymers. It particularly includes a polymer prepared by polymerizing ethylene with at least one comonomer, typically an α-olefin of 3 to 20 carbon atoms ($C_3$-$C_{20}$). Illustrative α-olefins include propylene, 1-butene, 1-hexene, 4-methyl-1-pentene, 1-heptene, 1-octene and styrene. The α-olefin is desirably a $C_3$-$C_{10}$ α-olefin. Preferred copolymers include EP and EO copolymers. Illustrative terpolymers include an ethylene/propylene/octene terpolymer as well as terpolymers of ethylene, a $C_3$-$C_{20}$ α-olefin and a diene such as dicyclopentadiene, 1,4-hexadiene, 1,3-pentadiene (piperylene) or 5-ethylidene-2-norbomene (ENB). The terpolymers are also known as EPDM terpolymers where the α-olefin is propylene or generically as EAODM terpolymers.

The substantially linear ethylene α-olefin interpolymers ("SLEPs" or "substantially linear ethylene polymers") are characterized by narrow molecular weight distribution (MWD) and narrow short chain branching distribution (SCBD) and may be prepared as described in United States Patent (USP) 5,272,236 and 5,278,272, relevant portions of both being incorporated herein by reference. The SLEPs exhibit outstanding physical properties by virtue of their narrow MWD and narrow SCBD coupled with LCB. The presence of LCB in these olefinic polymers allows for easier processing (faster mixing, faster processing rates) and allows for more efficient free radical crosslinking. USP 5,272,236 (column 5, line 67 through column 6, line 28) describes SLEP production via a continuous controlled polymerization process using at least one reactor, but allows for multiple reactors, at a polymerization temperature and pressure sufficient to produce a SLEP having desired properties. Polymerization preferably occurs via a solution polymerization process at a temperature of from 20°C to 250°C, using constrained geometry catalyst technology.

Suitable constrained geometry catalysts are disclosed at column 6, line 29 through column 13, line 50 of USP 5,272,236. These catalysts may be described as comprising a metal coordination complex that comprises a metal of groups 3-10 or the Lanthanide series of the Periodic Table of the Elements and a delocalized pi-bonded moiety substituted with a constrain-inducing moiety. The complex has a constrained geometry about the metal atom such that the angle at the metal between the centroid of the delocalized, substituted pi-bonded moiety and the center of at least one remaining substituent is less than such angle in a similar complex containing a similar pi-bonded moiety lacking in such constrain-inducing substituent. If such complexes comprise more than one delocalized, substituted pi-bonded moiety, only one such moiety for each metal atom of the complex is a cyclic, delocalized, substituted pi-bonded moiety. The catalyst further comprises an activating co-catalyst such as tris(pentafluoro-phenyl)borane. Specific catalyst complexes are discussed in USP 5,272,236 at column 6, line 57 through column 8, line 58 and in USP 5,278,272 at column 7, line 48 through column 9, line 37. USP 5,272,236, at column 8, lines 34-49, and USP 5.278,272, at column 9, lines 21-37. disclose as specific catalyst complexes: (tert-butylamido) (tetramethyl-$\eta^5$-cyclopentadienyl)-1,2-ethanediylzirconium dichloride, (tert-butylamido)(tetramethyl-$\eta^5$-cyclopentadienyl)-1,2-ethanediyltitanium dichloride, (methylamido)(tetramethyl-$\eta^5$-cyclopentadienyl)-1,2-ethanediylzirconium dichloride, (methylamido)(tetramethyl-$\eta^5$-cyclopentadienyl)-1,2-ethanediyltitanium dichloride, (ethylamido)(tetramethyl-$\eta^5$-cyclopentadienyl)-methylenetitanium dichloro, (tert-butylamido)-dibenzyl(tetramethyl-$\eta^5$-cyclopentadienyl)silanezirconium dibenzyl, (benzylamido)dimethyl(tetramethyl-$\eta^5$-cyclopentadienyl)-silanetitanium dichloride, (phenylphosphido)dimethyl(tetramethyl-$\eta^5$-cyclopentadienyl)silanezirconium dibenzyl, and (tert-butylamido)-dimethyl(tetramethyl-$\eta^5$-cyclopentadienyl)silanetitanium dimethyl. The teachings regarding the catalyst complexes in general and these specific complexes are incorporated by reference.

A SLEP is characterized by a narrow MWD and, if an interpolymer, by a narrow comonomer distribution. A SLEP is also characterized by a low residuals content, specifically in terms of catalyst residue, unreacted comonomers and low molecular weight (MW) oligomers generated during polymerization. A SLEP is further characterized by a controlled molecular architecture that provides good processability even though the MWD is narrow relative to conventional olefin polymers.

A preferred SLEP has a number of distinct characteristics, one of which is a comonomer content that is between 20 and 80 weight percent (wt%), more preferably between 30 and 70 wt%, ethylene, with the balance comprising one or more comonomers. SLEP comonomer content can be measured using infrared (IR) spectroscopy according to ASTM D-2238 Method B or ASTM D-3900. Comonomer content can also be determined by $C^{13}$ NMR Spectroscopy.

Additional distinct SLEP characteristics include $I_2$ and melt flow ratio (MFR or $I_{10}/I_2$). The interpolymers de-

sirably have an $I_2$ (ASTM D-1238, condition 190°C/2.16 kilograms (kg) (formerly condition E)), of 0.01-500 g/10 min, more preferably from 0.05-150 g/10 min. The SLEP also has a $I_{10}/I_2$ (ASTM D-1238) ≥ 5.63, preferably 6.5-15, more preferably 7- 10. For a SLEP, the $I_{10}/I_2$ ratio serves as an indication of the degree of LCB such that a larger $I_{10}/I_2$ ratio equates to a higher degree of LCB in the polymer.

A further distinct characteristic of a SLEP is MWD ($M_w/M_n$ or "polydispersity index "), as measured by gel permeation chromatography (GPC). $M_w/M_n$ is defined by the equation:

$$M_w/M_n \leq (I_{10}/I_2) - 4.63$$

The MWD is desirably > 0 and < 5, especially 1.5- 3.5, and preferably 1.7- 3.

A homogeneously branched SLEP surprisingly has a MFR that is essentially independent of its MWD. This contrasts markedly with conventional linear homogeneously branched and linear heterogeneously branched ethylene copolymers where the MWD must be increased to increase the MFR.

A SLEP may be still further characterized as having a critical shear rate at onset of surface melt fracture (OSMF) of at least 50 % greater than the critical shear rate at the OSMF of a linear olefin polymer that has a like $I_2$ and $M_w/M_n$.

SLEPs that meet the aforementioned criteria are suitably produced via constrained geometry catalysis by The Dow Chemical Company and DuPont Dow Elastomers L.L.C.

For many elastomeric applications, such as wire and cable insulation, weather-stripping, fibers, seals, gaskets, foams, footwear, flexible tubing, pipes, bellows and tapes, certain physical properties, such as tensile strength, compression set and increased end use temperature of articles manufactured from one or more polyolefins can be enhanced by introducing chemical linkages between molecular chains that constitute the polyolefin(s). As used herein, "crosslink (s)" refers to the presence of two or more chemical linkages between the same two molecular chains. Where only one chemical linkage exists between two molecular chains, that is referred to as a "branch point" or "branching". Crosslinks and branch points can be introduced between different molecular chains by any of a number of mechanisms. One mechanism involves grafting a chemically reactive compound to individual molecular chains or polymer backbones that constitute a bulk polymer in such a manner that the grafted compound on one chain may subsequently react with a similar grafted compound on another chain to form the crosslink, branch point or both. Silane crosslinking exemplifies this mechanism.

Any silane, or a mixture of such silanes, that will effectively graft to components of the elastomer compositions of the present invention, especially the elastomer phase, can be used as the silane moiety in the practice of this invention. Suitable silanes include those of the general formula:

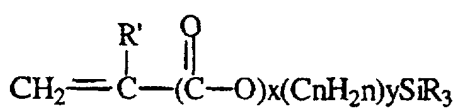

in which R' is a hydrogen atom or methyl group; x and y are 0 or 1 with the proviso that when x is 1, y is 1; n is an integer from 1 to 12 inclusive, preferably 1 to 4, and each R independently is a hydrolysable organic group such as a $C_{1-12}$ alkoxy group (e.g. methoxy, ethoxy, butoxy), an aryloxy group (e.g. phenoxy), an aralkoxy group (e.g. benzyloxy), a $C_{1-12}$ aliphatic acyloxy group (e.g. formyloxy, acetyloxy, propanoyloxy), amino or substituted amino groups (alkylamine, arylamino), or a lower alkyl ($C_{1-6}$) group, with the proviso that not more than two of the three R groups is an alkyl (e.g., vinyl dimethyl methoxy silane). The use of "C" with a subscript range denotes the number of carbon atoms in, for example, a lower alkyl group. Silanes useful in curing silicones which have ketoximino hydrolysable groups, such as vinyl tris(methylethylketoamino) silane, are also suitable. Useful silanes include unsaturated silanes that comprise an ethylenically unsaturated hydrocarboxyl group, such as a vinyl, ally, isopropyl, butyl, cyclohexenyl or gamma-(meth)acryloxy allyl group, and a hydrolysable group, such as, for example, a hydrocarbyloxy, hydrocarbonyloxy, or hydrocarbylamino group. Examples of hydrolysable groups include methoxy, ethoxy, formyloxy, acetoxy, proprionyloxy, and alkyl or arylamino group. Preferred silanes are the unsaturated alkoxy silanes which can be grafted onto the polymer. Vinyl trimethoxy silane, vinyl triethoxy silane, gamma-(meth)acryloxy propyl trimethoxy silane and mixtures of these silanes are the preferred silanes for use in establishing crosslinks.

The amount of silane used in the practice of this invention can vary widely depending upon the nature of the elastomer phase components, the silane, the processing conditions, the grafting efficiency, the ultimate application, and similar factors, but typically ≥ 0.1, preferably ≥ 0.3, more preferably ≥ 0.4, part of silane per hundred parts of

elastomer resin (phr) is used. Considerations of convenience and economy are usually the principal limitations on the maximum amount of silane used in the practice of this invention. Typically the maximum amount of silane does not exceed 3.5, preferably it does not exceed 2.5, more preferably it does not exceed 2.0, phr. As used in "phr", "resin" means the elastomer plus any other polymer(s) included with the elastomer during grafting. An amount of less than 0.1 wt% is undesirable because it does not result in enough branching. crosslinking or both to give enhanced morphological and rheological properties. An amount in excess of 3.5 wt% is undesirable because the elastomeric domains or phase becomes crosslinked to a level that is too high, thereby resulting in a loss of impact properties.

The silane is grafted to the resin (elastomer plus any other polymer(s) included with the elastomer during grafting), by any conventional method, typically in the presence of a free radical initiator such as a peroxide or an azo compound, or by ionizing radiation. Organic initiators, especially peroxide initiators, are preferred. Examples of peroxide initiators include dicumyl peroxide, di-tert-butyl peroxide, t-butyl perbenzoate, benzoyl peroxide, cumene hydroperoxide, t-butyl perbenzoate, benzoyl peroxide, cumene hydroperoxide, t-butyl peroctoate, methyl ethyl ketone peroxide, 2,5-dimethyl-2,5-di(t-butyl peroxy)hexane, lauryl peroxide, and tert-butyl peracetate. A suitable azo compound is azobisisobutyl nitrite. The amount of initiator can vary, but it is typically present in an amount of ≥ 0.04, preferably ≥ 0.06, phr. Typically the amount of initiator does not exceed 0.15, preferably it does not exceed about 0.10 phr. The ratio of silane to initiator can also vary widely, but a typical silane:initiator ratio is between 10:1 and 30:1, preferably between 18:1 and 24:1.

While any conventional method can be used to graft the silane to the resin, one preferred method is blending the two with the initiator in the first stage of a reactor extruder, such as a single screw or a twin screw extruder, preferably one with a length/diameter (L/D) ratio of 25:1 or greater. The grafting conditions can vary, but the melt temperatures are typically 160°C-280°C, preferably 190°C-250°C, depending upon the residence time and the half life of the initiator.

Cure is preferably accelerated with a catalyst, and any catalyst that will provide this function can be used in this invention. These catalysts generally include organic bases, carboxylic acids and organometallic compounds including organic titanates and complexes or carboxylates of lead, cobalt, iron, nickel, zinc and tin. Illustrative catalysts include dibutyl tin dilaurate, dioctyl tin maleate, dibutyl tin diacetate, dibutyl tin dioctoate, stannous acetate, stannous octoate, lead naphthenate, zinc caprylate and cobalt naphthenate. Tin carboxylate, especially dibutyl tin dilaurate and dioctyl tin maleate, and titanium compounds, especially titanium 2-ethylhexoxide, are particularly effective for this invention. The catalyst is preferably dibutyl tin dilaurate. The catalyst (or mixture of catalysts) is present in a catalytic amount, typically between 0.005 and 0.3 phr, based on weight of elastomer. The crosslinks, branch points or both that result from the cure process can form between two elastomer molecules, two crystalline polyolefin polymer molecules, an elastomer molecule and a crystalline polyolefin polymer molecule, or any combination thereof provided the requisite elastomer and crystalline polymer molecules are present.

A crosslinking catalyst, while preferred, is not needed to effect crosslinking of a silane-grafted elastomer. Crosslinking can occur over time by leaving compositions or articles containing a silane-grafted elastomer in a moist or steam-filled atmosphere. Where time is not critical and energy savings are desired, a simple moist environment without added heating will suffice.

Elastomer compositions of the present invention may be fabricated into parts, sheets or other form using any one of a number of conventional procedures. These procedures include, for example, injection molding, blow molding and extrusion, with injection molding being preferred. The compositions can also be formed, spun or drawn into films, fibers, multi-layer laminates or extruded sheets, or can be compounded with one or more organic or inorganic substances, on any machine suitable for such purposes. Fabrication may be conducted either before or after moisture curing, but is preferably conducted before moisture curing for ease of processing.

The crystalline olefin polymer is suitably selected from a polypropylene homopolymer, an EAO polymer having an ethylene content of more than 85 wt%, based on copolymer weight, high density polyethylene, and propylene/ethylene copolymers having an ethylene content of no more than 10 wt%, based on copolymer weight.

Suitable polypropylene resins include, for example, propylene homopolymer, propylene/ethylene random copolymers, propylene/ethylene block copolymers, propylene/butene random copolymers, and propylene/ethylene/butene terpolymers. Preparation of polypropylene resins involves the use of Ziegler catalysts, which allows the stereoregular polymerization of propylene to form isotactic polypropylene. The catalyst used is typically a titanium trichloride in combination with aluminum diethylmonochloride, as further described in Cecchin, USP 4,177,160. The various types of polymerization processes used for the production of polypropylene include the slurry process, which is run at 50-90°C and 0.5-1.5 MPa (5-15 atm), and the gas-phase and liquid-monomer processes, in which extra care must be given to the removal of amorphous polymer. Ethylene may be added to the reaction to form a polypropylene with ethylene blocks. Polypropylene resins may also be prepared by using any of a variety of metallocene, single site and constrained geometry catalysts together with their associated processes.

Polypropylene resins, when included as a component of nonporous, grafted and crosslinked elastomer compositions of the present invention, are included in an amount that falls within a range of 1- 50 parts by weight (pbw) per hundred pbw of elastomer. The range is preferably 5-30 pbw. The polypropylene resins desirably have a melt flow

rate (MFR), measured at 230°C and 2.16 kilograms (kg), of 0.5- 70 g/10 min.

Extender oils, such as paraffinic oils, aromatic oils naphthenic oils, mineral oils and liquid polybutene, can be used in nonporous, grafted and crosslinked elastomer compositions of the present invention. Naphthenic oils are preferred for ethylene/alpha-olefin copolymers and paraffinic oils are preferred for EPDM and EAODM polymers. Extender oils perform functions such as reducing composition viscosity and softening the compositions. They are optional components, but, when present, are typically used in amounts that fall within a range of 1-150 pbw per 100 pbw of polymers contained within the compositions of the present invention. The range is preferably 15-100 pbw.

A variety of additives may be advantageously used in the compositions of this invention for other purposes such as the following, any one or more of which may be used: antimicrobial agents such as organometallics, isothiazolones, organosulfurs and mercaptans; antioxidants such as phenolics, secondary amines, phophites and thioesters; antistatic agents such as quaternary ammonium compounds, amines, and ethoxylated, propoxylated or glycerol compounds; fillers and reinforcing agents such as glass, metal carbonates such as calcium carbonate, metal sulfates such as calcium sulfate, talc, clays, silicas, carbon blacks, graphite fibers and mixtures thereof; hydrolytic stabilizers; lubricants such as fatty acids, fatty alcohols, esters, fatty amides, metallic stearates, paraffinic and microcrystalline waxes, silicones and orthophosphoric acid esters; mold release agents such as fine-particle or powdered solids, soaps, waxes, silicones, polyglycols and complex esters such as trimethylolpropane tristearate or pentaerythritol tetrastearate; pigments, dyes and colorants; plasticizers such as esters of dibasic acids (or their anhydrides) with monohydric alcohols such as o-phthalates, adipates and benzoates; heat stabilizers such as organotin mercaptides, an octyl ester of thioglycolic acid and a barium or cadmium carboxylate; ultraviolet light stabilizers used as a hindered amine, an o-hydroxyphenylbenzotriazole, a 2-hydroxy,4-alkoxyenzophenone, a salicylate, a cynoacrylate, a nickel chelate and a benzylidene malonate and oxalanilide. A preferred hindered phenolic antioxidant is Irganox ™ 1076 antioxidant, available from Ciba-Geigy Corp. Such additives, if used, typically do not exceed 45 wt% of the total composition, and are advantageously 0.001- 20 wt%, preferably 0.01- 15 wt% and more preferably 0.1- 10 wt%, based on total composition weight.

Articles of manufacture that may be fabricated from the nonporous, grafted and crosslinked elastomer compositions of the present invention include, for example, those selected from the group consisting of gaskets, membranes, sheets, footwear sole components, footwear upper components, shaft bushings, and wear-control articles such as hinges and drawer slides. Skilled artisans will readily appreciate other articles of manufacture that may be fabricated from the compositions of the present invention.

The nonporous, grafted and crosslinked elastomer compositions of the present invention, particularly when fabricated into footwear sole components, have a coefficient of friction (COF), measured in accordance with ASTM D-1894 using mason tile (dry and wet), of at least 0.3. The COF, measured with wet mason tile, is beneficially at least 0.4, desirably at least 0.45, preferably at least 0.5, more preferably at least 0.55. The COF, measured with dry mason tile, is beneficially at least 0.4, desirably at least 0.6, preferably at least 0.9, more preferably at least 1.0. The same COF values apply to the crosslinkable compositions of the present invention following crosslinking and fabrication.

The following examples illustrate but do not, either explicitly or by implication, limit the present invention. Unless otherwise stated, all parts and percentages are by weight, on a total weight basis.

EXAMPLES

Four different ethylene/octene polymers or SLEPs are used in the examples. All are available from DuPont Dow Elastomers L.L.C. Polymer A is available as Engage® EG8445. Polymer B is available as Engage® EG8448. Polymer C is an experimental polymer and Polymer D is available as Engage® EG8200. Table I below lists the density in grams per cubic centimeter (g/cm$^3$), MI, in g/10 min and percent (%) crystallinity for each of the polymers.

The crystallinity of a polymer is determined by differential scanning calorimetry (DSC) on a TA Instrument 2920 DSC equipped with a liquid nitrogen cooling accessory. Samples are prepared in the form of thin films and placed in aluminum pans. They are heated initially to 180°C and maintained at this temperature for four minutes. They are then cooled at 10°C per minute to -100°C before being reheated to 140°C at 10°C per minute. The total heat of fusion is obtained from the area under the melting curve. The percent crystallinity is determined by dividing the total heat of fusion by the heat of fusion value for polyethylene (292 joules per gram (J/g)).

Table I -

| Polymer Description | | | |
|---|---|---|---|
| Polymer Designation | Density (g/cm$^3$) | MI (g/10 min) | % Crystallinity |
| A | 0.910 | 3.5 | 33 |
| B | 0.896 | 1.6 | 27 |

Table I - (continued)

| Polymer Description | | | |
|---|---|---|---|
| Polymer Designation | Density (g/cm$^3$) | MI (g/10 min) | % Crystallinity |
| C | 0.858 | 1.7 | 3 |
| D | 0.870 | 5.0 | 10 |

Grafting is accomplished by a procedure that starts with weighing 22.7 kilograms (kg) of dry polymer pellets into a plastic lined cardboard drum (50 gallon(gal) or 200 liter(1)) together with a pre-weighed solution of vinyl trimethoxy silane (VTMOS) and dicumyl peroxide (DCP) in a ratio of VTMOS:DCP of 18:1. The VTMOS and DCP are commercially available from Aldrich Chemical. The amount of VTMOS added is 1.8 wt%, based upon polymer weight. The contents of the drum are tumble blended for one hour to allow uniform absorption onto and into the pellets.

The contents of the container are then starve-fed to a ZSK 30 millimeter (mm), Werner Pfleiderer, co-rotating, twin screw extruder equipped with a high shear mixing screw. By operating at the temperatures (in degrees centigrade (°C)) shown in Table II below and at a speed of 100 revolutions per minute (rpm), the extruder effectively melt mixes the container contents and grafts the silane to the elastomer. Using a double strand die and a die pressure of 300 pounds per square inch (psi) (2.07 megapascals (Mpa)), extrudate exits the extruder at a rate of 15 to 20 pounds (6.8-9.1 kilogram (kg)) per hour. The extrudate enters the water bath where it is quenched. The quenched extrudate is then dried with an air knife, pelletized and placed in a wax lined bag. Prior to being placed in the bag, the resulting pellets are purged with dry nitrogen.

If an extender oil, such as Shellflex® 371, a naphthenic oil commercially available from Shell Chemical Company, is needed in a composition, the container contents, now pelletized, are passed a second time through the extruder and oil is added into zone two of the extruder using a pump and injection nozzle. Extruder operating temperatures needed for oil incorporation are also shown in Table II. For oil incorporation, the extruder operates at a speed of 250 rpm to provide an output of 25 to 30 pounds (11.3 to 13.6 kg) per hour. Extruder output is then processed as outlined above for polymer that contains no extender oil.

Table II -

| Extruder Operating Conditions | | |
|---|---|---|
| Apparatus Zone | First (Grafting) Pass Temperatures (°C) | Second (Oil Incorporation) Pass Temperatures (°C) |
| 1 | 140 | 164 |
| 2 | 160 | 68 |
| 3 | 180 | 102 |
| 4 | 205 | 137 |
| 5 | 206 | 145 |
| Die | 190 | 142 |
| Water Bath | 13 | 13 |

A cure catalyst master batch is prepared using 11.4 kg Polymer D (Table I) and sufficient dibutyl tin dilaurate (DBTDL) (Aldrich Chemical) crosslinking catalyst to provide a DBTDL content of 5000 parts per million parts of polymer (ppm).

Silane-grafted polymers, prepared as described above, are dry blended with five wt%, based on weight of polymer plus weight of master batch, of the master batch. The resulting dry blend is then converted into ASTM test specimens using an Arburg Model 370C-800-225 (800 kilonewton (KN) hydraulic clamping force) reciprocating screw injection molding machine (30 millimeter (mm) screw). Injection molding conditions are shown in Table III below.

Table III -

| Injection Molding Machine Conditions | |
|---|---|
| Parameter | Setting |
| Zone 1 Temperature (°F/°C) | 385/196 |

Table III - (continued)

| Injection Molding Machine Conditions | |
|---|---|
| Parameter | Setting |
| Temperature Zones 2-4 (°F/°C) | 400/204 |
| Zone 5 Temperature (°F/°C) | 410/210 |
| Shot size | 58.3 to 58.8 cc |
| Injection Pressure (bar/MPa) | 700/70 |
| Hold Pressure (bar/MPa) | 150 to 190/15 to 19 |
| Injection Time | 1.95 to 2.3 seconds |
| Cooling Time | 30 to 40 seconds |
| Screw Injection Velocity | 25 meters per minute |

The silane-grafted injection molded test specimens are separated by a paper towel and placed in a plastic bag that is filled with water, sealed and placed in an oven operating at a set temperature of 50°C for two days to effect crosslinking within the test specimens. The samples are then removed from the bags and towel dried before being subjected to physical property testing as follows: a) % gel (ASTM D-2765), b) Shore A Hardness (ASTM D-2240). c) Tensile Strength (ASTM D-638), d) Elongation (ASTM D-638), e) NBS Abrasion (ASTM D-1630) and f) Coefficient of Friction (COF) using mason tile (dry and wet) (ASTM D-1894). Physical property test results are summarized in Table V below.

Table IV shows component ratios for the silane-grafted, injection molded and crosslinked test specimens. The component ratios reflect the amounts of each component without taking into account any polymer used in the master batch. Polypropylene (PP), where added, is commercially available from Himont under the trade designation Profax® 6323.

Three Comparative Examples are shown in Table V together with Examples 1-14 that represent the present invention. Comparative Examples A, B and C have, respectively, the same component ratios as Examples 2, 11 and 12, but they are not silane-grafted and crosslinked. Example 13 is a blend of 50 wt% of the material of Example 12 and 50 wt% of the material of Comparative Example C. Example 14 is a blend of 25 wt% of the material of Example 12 and 75 wt% of the material of Comparative Example C.

Table IV Component Ratios

| Component | Ex 1 | Ex 2 | Ex 3 | Ex 4 | Ex 5 | Ex 6 | Ex 7 | Ex 8 | Ex 9 | Ex 10 | Ex 11 | Ex 12 |
|---|---|---|---|---|---|---|---|---|---|---|---|---|
| Polymer A | -- | -- | -- | 20 | 14 | 20 | 14 | -- | -- | -- | -- | -- |
| Polymer C | 100 | -- | -- | -- | -- | 80 | 56 | 95 | 72 | 60 | -- | -- |
| Polymer D | -- | 100 | 90 | 80 | 56 | -- | -- | -- | -- | -- | 90 | 63 |
| PP | -- | -- | 10 | -- | -- | -- | -- | 5 | 13 | 10 | 10 | 7 |
| Oil | -- | -- | -- | -- | 30 | -- | 30 | -- | 15 | 30 | -- | 30 |

Table V -

| Physical Property Test Results | | | | | | | |
|---|---|---|---|---|---|---|---|
| Ex | Tensile (psi/ MPa) | Elongation (%) | Gel (wt%) | Hardness (Shore A) | NBS Abrasion | COF (Dry Tile) | COF (Wet Tile) |
| 1 | 490/3.4 | 140 | 98 | 62 | 40 | 1.07 | 0.70 |
| 2 | 690/4.8 | 320 | 84 | 73 | 80 | 0.77 | 0.47 |
| A | 669/4.6 | 755 | 0 | 76 | 48 | 0.69 | 0.46 |
| 3 | 790/5.4 | 280 | 91 | 78 | 140 | 0.90 | 0.49 |
| 4 | 780/5.4 | 240 | 96 | 80 | 165 | N.D. | N.D. |
| 5 | 370/2.6 | 240 | 57 | 58 | 75 | N.D. | N.D. |

Table V - (continued)

| Physical Property Test Results | | | | | | | |
|---|---|---|---|---|---|---|---|
| Ex | Tensile (psi/MPa) | Elongation (%) | Gel (wt%) | Hardness (Shore A) | NBS Abrasion | COF (Dry Tile) | COF (Wet Tile) |
| 6 | 680/4.7 | 180 | 94 | 72 | 75 | N.D. | N.D. |
| 7 | 360/2.5 | 170 | 60 | 58 | 62 | N.D. | N.D. |
| 8 | 530/3.7 | 141 | 96 | 64 | 155 | 0.91 | 0.59 |
| 9 | 373/2.6 | 131 | 83 | 56 | 124 | 1.16 | 0.57 |
| 10 | 549/3.8 | 186 | 76 | 64 | 143 | 1.05 | 0.56 |
| 11 | 793/5.5 | 276 | 91 | 78 | 143 | 0.90 | 0.49 |
| B | 878/6.1 | 990 | 0 | 80 | 60 | 0.89 | 0.49 |
| 12 | 501/3.5 | 347 | 63 | 59 | 96 | 1.02 | 0.45 |
| C | 393/2.7 | 815 | 0 | 60 | 67 | 0.82 | 0.42 |
| 13 | 680/4.7 | 689 | 43 | 57 | 56 | 1.50 | 0.38 |
| 14 | 618/4.3 | >1000 | 24 | 56 | 47 | 1.38 | 0.32 |
| N.D. = Not Determined | | | | | | | |

The data in Table V demonstrate that compositions representative of the present invention provide physical properties, especially Shore A hardness and COF (wet mason tile), that are typically required for end use applications such as athletic and industrial footwear. Other physical properties, such as tensile and elongation, are acceptable for the same applications. By way of contrast, Comparative Example A, prepared from the same materials and using the same material ratios as Example 2, but without silane grafting and crosslinking, has a gel content of 0, a comparable Hardness (Shore A) value and a similar COF value, but a markedly lower NBS abrasion value. "Markedly lower" means at least 25% lower, more often at least 50% lower.

When test samples are prepared as above, but with a polymer having a Hardness (Shore A) before grafting and crosslinking of more than 85, Hardness (Shore A) values increase relative to the same polymer without grafting and crosslinking, while NBS Abrasion values decrease relative to the same polymer without grafting and crosslinking. Similar results are expected for other compositions of the present invention.

## Claims

1. A nonporous, grafted and crosslinked elastomer composition comprising (i) at least one grafted and crosslinked interpolymer elastomer selected from homogeneously branched substantially linear ethylene/alpha-olefin polymers with a density of from 0.85 to 0.92 g/cm$^3$, a melt index of from 0.01 to 500 g/10 minutes and a hardness (Shore A) of no more than 85, and (ii) at least one crystalline olefin polymer, the crystalline olefin polymer being selected from a polypropylene homopolymer, an ethylene/alpha-olefin polymer having an ethylene content of more than 85 wt%, based on copolymer weight, high density polyethylene, or a propylene/ethylene copolymer having an ethylene content of no more than 10 wt%, based on copolymer weight, the elastomer having been grafted with a silane moiety that promoted crosslinking of the grafted elastomer in the presence of moisture and then was crosslinked following exposure to moisture, the grafted and crosslinked elastomer composition having a hardness (Shore A) of no more than 85 and an abrasion resistance (ASTM D 1630-83, NBS Abrader) that is greater than that of an ungrafted elastomer composition, the ungrafted composition being prepared from the same elastomer(s) and crystalline olefin polymer(s), except that the elastomer is substantially free of grafting and crosslinking.

2. A crosslinkable elastomer composition comprising (i) at least one grafted EAO interpolymer elastomer selected from homogeneously branched substantially linear ethylene/alpha-olefin polymers with a density of from 0.85 to 0.92 g/cm$^3$, a melt index of from 0.01 to 500 g/10 minutes and a hardness (Shore A) ≤ 85, and (ii) at least one crystalline olefin polymer, the crystalline olefin polymer being selected from a polypropylene homopolymer, an ethylene/alpha-olefin polymer having an ethylene content of more than 85 wt%, based on copolymer weight, high density polyethylene, or a propylene/ethylene copolymer having an ethylene content of no more than 10 wt%,

based on copolymer weight, the elastomer being grafted with a silane moiety that promotes crosslinking of the grafted elastomer in the presence of moisture, the crosslinkable composition having an abrasion resistance and, following exposure to moisture, yielding a grafted, crosslinked elastomer composition that has an abrasion resistance, the abrasion resistance of the crosslinked composition being greater than the abrasion resistance of the crosslinkable composition.

**3.** The composition of Claim 1 or Claim 2, wherein the silane moiety is represented by the general formula:

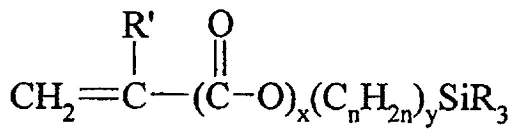

in which R' is a hydrogen atom or methyl group; x and y are 0 or 1 with the proviso that when x is 1, y is 1; n is an integer from 1 to 12 inclusive, and each R independently is a hydrolysable organic group selected from the group consisting of an alkoxy group having from 1 to 12 carbon atoms, an aralkoxy group having from 1 to 12 carbon atoms, or a lower alkyl group having 1 to 6 carbon atoms inclusive, with the proviso that no more than two of the three R groups is an alkyl.

**4.** The composition of Claim 3, wherein the silane moiety is an unsaturated alkoxy silane selected from vinyl trimethoxy silane, vinyl triethoxy silane, and gamma-(meth) acryloxy propyl trimethoxy silane.

**5.** The composition of Claim 3, wherein the crosslinked elastomer composition has an abrasion resistance that is at least 25% greater than that of either the ungrafted elastomer composition or the crosslinkable composition.

**6.** The composition of Claim 3, wherein the alpha-olefin is selected from propylene, butene, 4-methyl-1-pentene, 1-hexene, 1-heptene, styrene and 1-octene.

**7.** The composition of Claim 3, wherein the interpolymer is an ethylene/propylene/octene terpolymer.

**8.** The composition of Claim 3, wherein the ethylene/alpha-olefin interpolymer is a terpolymer of ethylene, an alpha-olefin containing from 3 to 20 carbon atoms and a diene monomer, the diene monomer being at least one of dicyclopentadiene, 1,4-hexadiene, 1,3-pentadiene and 5-ethylidene-2-norbornene.

**9.** The composition of Claim 3, wherein the ethylene/alpha-olefin interpolymer is a substantially linear ethylene polymer that has an ethylene content within a range of from 20 and 80 wt% inclusive and a comonomer content that may include more than one comonomer within a range of from 80 to 20 wt% inclusive, the contents totalling 100 wt%, a melt index ($I_2$) of 0.01-500 grams/10 minutes, a melt flow ratio (MFR or $I_{10}/I_2$) that is $\geq 5.63$, a molecular weight distribution ($M_w/M_n$) that is > 0 but < 5 and a critical shear rate at onset of melt fracture (OSMF) of at least 50 % greater than the critical shear rate at OSMF of a linear olefin polymer that has a like $I_2$ and $M_w/M_n$.

**10.** The composition of Claim 3, further comprising an extender oil selected from paraffinic oils, aromatic oils, naphthenic oils, mineral oils and liquid polybutene, the extender oil being present in an amount within a range of from 1 to 150 parts by weight per 100 parts by weight of ethylene/alpha-olefin interpolymer elastomer and crystalline olefin polymer, and, optionally, at least one additive selected from the group consisting of antimicrobial agents, antistatic agents, fillers and reinforcing agents selected from glass, metal carbonates, metal sulfates, talc, clays, silicas, carbon blacks, graphite fibers and mixtures thereof, lubricants, mold release agents, pigments, plasticizers, heat stabilizers, and ultraviolet light stabilizers, the additive(s) being present in a total amount that does not exceed 45 wt%, based on total composition weight.

**11.** The composition of Claim 3, wherein the grafted and crosslinked elastomer composition has a coefficient of friction (ASTM D-1894), measured with a wet mason tile, of at least 0.3.

**12.** A nonporous article of manufacture fabricated from the grafted and crosslinked elastomer composition of any one of Claims 1 to 11, the article being selected from gaskets, membranes, sheets, footwear sole components, footwear

upper components, shaft bushings, and wear-control articles, the wear-control articles including hinges and drawer slides.

**Patentansprüche**

1. Nichtporöse, gepfropfte und vernetzte Elastomerzusammensetzung, umfassend (i) mindestens ein gepfropftes und vernetztes Interpolymer-Elastomer, ausgewählt aus homogen verzweigten, im wesentlichen linearen Ethylen/alpha-Olefin-Polymeren mit einer Dichte von 0,85 bis 0,92 g/$cm^3$, einem Schmelzindex von 0,01 bis 500 g/10 Minuten und einer Härte (Shore A) von nicht mehr als 85, und (ii) mindestens ein kristallines Olefinpolymer, wobei das kristalline Olefinpolymer aus einem Polypropylenhomopolymer, einem Ethylen/alpha-Olefin-Polymer mit einem Ethylengehalt von mehr als 85 Gew.-%, bezogen auf das Copolymergewicht, Polyethylen hoher Dichte oder einem Propylen/Ethylen-Copolymer mit einem Ethylengehalt von nicht mehr als 10 Gew.-%, bezogen auf das Copolymergewicht, ausgewählt ist, wobei das Elastomer mit einer Silaneinheit gepfropft worden ist, die die Vernetzung des gepfropften Elastomers in Anwesenheit von Feuchtigkeit förderte, und dann nach Einwirkung von Feuchtigkeit vernetzt wurde, wobei die gepfropfte und vernetzte Elastomerzusammensetzung eine Härte (Shore A) von nicht mehr als 85 und eine Abriebfestigkeit (ASTM D 1630-83, NBS Abrader) hat, die größer als die einer ungepfropften Elastomerzusammensetzung ist, wobei die ungepfropfte Zusammensetzung aus dem(n) gleichen Elastomer(en) und kristallinem(n) Olefinpolymer(en) hergestellt wird, außer, daß das Elastomer im wesentlichen frei von Pfropfung und Vernetzung ist.

2. Vemetzbare Elastomerzusammensetzung, umfassend (i) mindestens ein gepfropftes EAO-Interpolymer-Elastomer, ausgewählt aus homogen verzweigten, im wesentlichen linearen Ethylen/alpha-Olefin-Polymeren mit einer Dichte von 0,85 bis 0,92 g/$cm^3$, einem Schmelzindex von 0,01 bis 500 g/10 Minuten und einer Härte (Shore A) ≤ 85, und (ii) mindestens ein kristallines Olefinpolymer, wobei das kristalline Olefinpolymer aus einem Polypropylenhomopolymer, einem Ethylen/alpha-Olefin-Polymer mit einem Ethylengehalt von mehr als 85 Gew.-%, bezogen auf das Copolymergewicht, Polyethylen hoher Dichte oder einem Propylen/Ethylen-Copolymer mit einem Ethylengehalt von nicht mehr als 10 Gew.-%, bezogen auf das Copolymergewicht, ausgewählt ist, wobei das Elastomer mit einer Silaneinheit gepfropft ist, die die Vernetzung des gepfropften Elastomers in Anwesenheit von Feuchtigkeit fördert, wobei die vernetzbare Zusammensetzung eine Abriebfestigkeit hat und wobei sich nach Einwirkung von Feuchtigkeit eine gepfropfte, vernetzte Elastomerzusammensetzung ergibt, die eine Abriebfestigkeit hat, wobei die Abriebfestigkeit der vernetzten Zusammensetzung größer als die Abriebfestigkeit der vernetzbaren Zusammensetzung ist.

3. Zusammensetzung nach Anspruch 1 oder Anspruch 2, wobei die Silaneinheit durch die allgemeine Formel:

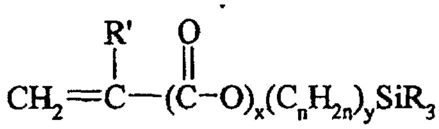

dargestellt wird, in welcher R' ein Wasserstoffatom oder eine Methylgruppe ist; x und y 0 oder 1 sind, mit der Maßgabe, daß, wenn x 1 ist, y 1 ist; n eine ganze Zahl von 1 bis einschließlich 12 ist, und jedes R unabhängig eine hydrolysierbare organische Gruppe ist, ausgewählt aus der Gruppe, bestehend aus einer Alkoxygruppe mit von 1 bis 12 Kohlenstoffatomen, einer Aralkoxygruppe mit von 1 bis 12 Kohlenstoffatomen oder einer Niederalkylgruppe mit 1 bis einschließlich 6 Kohlenstoffatomen, mit der Maßgabe, daß nicht mehr als zwei der drei R-Gruppen ein Alkyl sind.

4. Zusammensetzung nach Anspruch 3, wobei die Silaneinheit ein ungesättigtes Alkoxysilan, ausgewählt aus Vinyltrimethoxysilan, Vinyltriethoxysilan und gamma-(Meth)acryloxypropyltrimethoxysilan, ist.

5. Zusammensetzung nach Anspruch 3, wobei die venletzte Elastomerzusammensetzung eine Abriebfestigkeit hat, die mindestens 25% größer als die entweder der ungepfropften Elastomerzusammensetzung oder der vernetzbaren Zusammensetzung ist.

6. Zusammensetzung nach Anspruch 3, wobei das alpha-Olefin aus Propylen, Buten, 4-Methyl-1-penten, 1-Hexen, 1-Hepten, Styrol und 1-Octen ausgewählt ist.

7. Zusammensetzung nach Anspruch 3, wobei das Interpolymer ein Ethylen/Propylen/Octen-Terpolymer ist.

8. Zusammensetzung nach Anspruch 3, wobei das Ethylen/alpha-Olefin-Interpolymer ein Terpolymer von Ethylen, einem alpha-Olefin, das von 3 bis 20 Kohlenstoffatome enthält, und einem Dienmonomer, wobei das Dienmonomer mindestens eines von Dicyclopentadien, 1,4-Hexadien, 1,3-Pentadien und 5-Ethyliden-2-norbornen ist, ist.

9. Zusammensetzung nach Anspruch 3, wobei das Ethylen/alpha-Olefin-Interpolymer ein im wesentlichen lineares Ethylenpolymer ist, das einen Ethylengehalt innerhalb eines Bereiches von 20 und einschließlich 80 Gew.-% und einen Comonomergehalt, der mehr als ein Comonomer innerhalb eines Bereiches von 80 bis einschließlich 20 Gew.-% einschließen kann, wobei der Gehalt sich insgesamt auf 100 Gew.-% beläuft, einen Schmelzindex ($I_2$) von 0,01-500 Gramm/10 Minuten, ein Schmelzfließverhältnis (MFR oder $I_{10}/I_2$), das $\geq$ 5,63 ist, eine Molekulargewichtsverteilung ($M_w/M_n$), die > 0, aber < 5 ist, und eine kritische Schergeschwindigkeit bei Einsetzen des Schmelzbruchs (OSMF) von mindestens 50% mehr als die kritische Schergeschwindigkeit bei dem OSMF eines linearen Olefinpolymers, das eine ähnliche $I_2$ und $M_w/M_n$ hat, hat.

10. Zusammensetzung nach Anspruch 3, weiterhin umfassend ein Extenderöl, ausgewählt aus paraffinischen Ölen, aromatischen Ölen, naphthenischen Ölen, Mineralölen und flüssigem Polybuten, wobei das Extenderöl in einem Anteil innerhalb eines Bereiches von 1 bis 150 Gewichtsteilen pro 100 Gewichtsteilen von Ethylen/alpha-Olefin-Interpolymer-Elastomer und kristallinem Olefinpolymer vorhanden ist; und, gegebenenfalls, mindestens einen Zusatzstoff, ausgewählt aus der Gruppe, bestehend aus antimikrobiellen Mitteln, Antistatikmitteln, Füllstoffen und verstärkenden Mitteln, ausgewählt aus Glas, Metallcarbonaten, Metallsulfaten, Talk, Tonen, Siliciumdioxiden, Rußen, Graphitfasern und Gemischen davon, Gleitmitteln, Formtrennmitteln, Pigmenten, Weichmachern, Wärmestabilisatoren und Stabilisatoren für ultraviolettes Licht, wobei der (die) Zusatzstoff(e) in einer Gesamtmenge vorhanden ist (sind), die 45 Gew.-%, bezogen auf das Gesamtgewicht der Zusammensetzung, nicht überschreitet.

11. Zusammensetzung nach Anspruch 3, wobei die gepfropfte und vernetzte Elastomerzusammensetzung einen Reibungskoeffizienten (ASTM D-1894), gemessen mit einem feuchten Mauerziegel, von mindestens 0,3 hat.

12. Nichtporöser Fertigungsgegenstand, erzeugt aus der gepfropften und vernetzten Elastomerzusammensetzung nach einem der Ansprüche 1-11, wobei der Gegenstand aus Flachdichtungen, Membranen, Bahnen, Sohlenkomponenten für Fußbekleidung, oberen Komponenten für Fußbekleidung, Wellenbuchsen und Gegenständen zur Verschleißsteuerung, wobei die Gegenstände zur Verschleißsteuerung Scharniere und Führungen für Auszüge einschließen, ausgewählt ist.

**Revendications**

1. Composition d'élastomère greffé et réticulé, non poreux comprenant (i) au moins un élastomère interpolymère greffé et réticulé choisi parmi des polymères d'éthylène/alpha-oléfine substantiellement linéaires, ramifiés de manière homogène avec une densité de 0,85 à 0,92 g/cm$^3$, un indice de fluidité de 0,01 à 500 g/10 minutes et une dureté (Shore A) ne dépassant pas 85, et (ii) au moins un polymère d'oléfine cristallin, le polymère d'oléfine cristallin étant choisi parmi un homopolymère de polypropylène, un polymère d'éthylène/alpha-oléfine présentant une teneur en éthylène de plus de 85% en poids, sur la base du poids du copolymère, un polyéthylène haute densité ou un copolymère de propylène/éthylène présentant une teneur en éthylène ne dépassant pas 10% en poids, sur la base du poids du copolymère, l'élastomère ayant été greffé avec une fraction de silane qui favorisait la réticulation de l'élastomère greffé en présence d'humidité et puis il a été réticulé à la suite de l'exposition à l'humidité, la composition d'élastomère greffé et réticulé possédant une dureté (Shore A) ne dépassant pas 85 et une résistance à l'abrasion (ASTM D 1630-83, appareil à abraser NBS) qui est supérieure à celle d'une composition d'élastomère non greffé, la composition non greffée étant préparée à partir du ou des mêmes élastomères et du ou des mêmes polymères d'oléfine cristallins, à l'exception du fait que l'élastomère est substantiellement exempt de greffe et de réticulation.

2. Composition d'élastomère pouvant être réticulé comprenant (i) au moins un élastomère interpolymère EAO greffé choisi parmi des polymères d'éthylène/alpha-oléfine substantiellement linéaires, ramifiés de manière homogène avec une densité de 0,85 à 0,92 g/cm$^3$, un indice de fluidité de 0,01 à 500 g/10 minutes et une dureté (Shore A) $\leq$ 85, et (ii) au moins un polymère d'oléfine cristallin, le polymère d'oléfine cristallin étant choisi parmi un homopolymère de polypropylène, un polymère d'éthylène/alpha-oléfine présentant une teneur en éthylène de plus de 85% en poids, sur la base du poids du copolymère, un polyéthylène haute densité ou un copolymère de propylène/éthylène présentant une teneur en éthylène ne dépassant pas 10% en poids, sur la base du poids de copolymère, l'élastomère étant greffé avec une fraction de silane qui favorise la réticulation de l'élastomère greffé en présence d'humidité, la composition pouvant être réticulée possédant une résistance à l'abrasion et, à la suite d'une exposition à l'humidité, donnant une composition d'élastomère greffé, réticulé qui possède une résistance à l'abrasion, la résistance à l'abrasion de la composition réticulée étant supérieure à la résistance à l'abrasion de la composition pouvant être réticulée.

**3.** Composition suivant la revendication 1 ou la revendication 2, dans laquelle la fraction de silane est reorésentée par la formule générale:

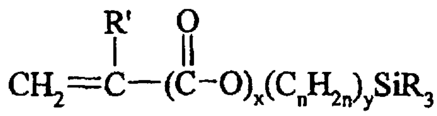

dans laquelle R' est un atome d'hydrogène ou un groupe méthyle; x et y sont 0 ou 1 à condition que, lorsque x est 1, y est 1; n est un nombre entier de 1 à 12 inclus, et chaque R est indépendamment un groupe organique hydrolysable choisi dans le groupe constitué d'un groupe alkoxy contenant de 1 à 12 atomes de carbone, un groupe aralkoxy contenant de 1 à 12 atomes de carbone, ou un groupe alkyle inférieur contenant de 1 à 6 atomes de carbone inclus, à condition que pas plus de deux des trois groupes R soient un groupe alkyle.

**4.** Composition suivant la revendication 3, dans laquelle la fraction de silane est un alkoxysilane insaturé choisi parmi le vinyltriméthoxysilane, le vinyltriéthoxysilane et le gamma-(méth)acryloxypropyltriméthoxysilane.

**5.** Composition suivant la revendication 3, dans laquelle la composition d'élastomère réticulé possède une résistance à l'abrasion qui est au moins 25% supérieure à celle de soit la composition d'élastomère non greffé, soit la composition pouvant être réticulée.

**6.** Composition suivant la revendication 3, dans laquelle l'alpha-oléfine est choisie parmi le propylène, le butène, le 4-méthyl-1-pentène, le 1-hexène, le 1-heptène, le styrène et le 1-octène.

**7.** Composition suivant la revendication 3, dans laquelle l'interpolymère est un terpolymère d'éthylène/propylène/octène.

**8.** Composition suivant la revendication 3, dans laquelle l'interpolymère d'éthylène/alpha-oléfine est un terpolymère d'éthylène, d'une alpha-oléfine contenant de 3 à 20 atomes de carbone et d'un diène monomère, le diène monomère étant au moins un parmi le dicyclopentadiène, le 1,4-hexadiène, le 1,3-pentadiène et le 5-éthylidène-2-norbornène.

**9.** Composition suivant la revendication 3, dans laquelle l'interpolymère d'éthylène/alpha-oléfine est un polymère d'éthylène substantiellement linéaire qui présente une teneur en éthylène dans un intervalle de 20 à 80% en poids inclus et une teneur en co-monomère qui peut inclure plus d'un co-monomère dans un intervalle de 80 à 20% en poids inclus, les teneurs totalisant 100% en poids, un indice de fluidité ($I_2$) de 0,01-500 grammes/10 minutes, un rapport de fluidité (MFR ou $I_{10}/I_2$) qui est ≥ 5,63, une distribution de poids moléculaire ($M_w/M_n$) qui est > 0, mais < 5 et un gradient de cisaillement critique au début des marques de coulée (OSMF) au moins 50% supérieur au gradient de cisaillement critique au OSMF d'un polymère d'oléfine linéaire qui présente des valeurs de $I_2$ et de $M_w/M_n$ identiques.

**10.** Composition suivant la revendication 3, comprenant en outre une huile diluante choisie parmi des huiles paraffiniques, des huiles aromatiques, des huiles naphténiques, des huiles minérales et du polybutène liquide, l'huile diluante étant présente selon une quantité dans un intervalle de 1 à 150 parties en poids pour 100 parties en poids d'élastomère interpolymère d'éthylène/alpha-oléfine et de polymère d'oléfine cristallin; et, éventuellement, au moins un additif choisi dans le groupe constitué d'agents antimicrobiens, d'agents antistatiques, de charges et d'agents de renforcement choisis parmi du verre, des carbonates métalliques, des sulfates métalliques, du talc, des argiles, des silices, des noirs de carbone, des fibres de graphite et des mélanges de ceux-ci, des lubrifiants, des agents de démoulage, des pigments, des plastifiants, des stabilisateurs thermiques et stabilisateurs vis-à-vis d'une lumière ultraviolette, le ou les additifs étant présents selon une quantité totale qui ne dépasse pas 45% en

poids, sur la base du poids de la composition totale.

**11.** Composition suivant la revendication 3, dans laquelle la composition d'élastomère greffé et réticulé possède un coefficient de frottement (ASTM D-1894), mesuré avec un carreau de maçon humide, d'au moins 0,3.

**12.** Article de fabrication non poreux fabriqué à partir de la composition d'élastomère greffé et réticulé suivant l'une quelconque des revendications 1 à 11, l'article étant choisi parmi des joints d'étanchéité, des membranes, des feuilles, des composants de semelles d'articles chaussants, des composants supérieurs d'articles chaussants, des bagues d'arbre et des articles de contrôle d'usure, les articles de contrôle d'usure incluant des charnières et des glissières pour tiroir.